# EUROPEAN PATENT SPECIFICATION

(11) **EP 1 158 870 B1**
(45) Date of publication and mention of the grant of the patent: **18.06.2003**
(21) Application number: 00903053.7
(22) Date of filing: 03.02.2000
(51) Int. Cl.: A23K 3/00, A23K 3/02

(54) **METHOD OF ENSILAGE OF FODDER**
VERFAHREN ZUM EINSAEUERN VON FUTTER
PROCEDE D'ENSILAGE DE FOURRAGE

(30) Priority: 04.02.1999 NO 990525
(43) Date of publication of application: 05.12.2001
(73) Proprietor: EnsiGas AS, 6878 Veitastrond (NO)
(72) Inventor: ASBJORN, Nes, 6878 Veitastrond (NO)
(74) Representative: Wiklund, Erik
(86) International application number: NO0000033
(87) International publication number: WO00045645

(56) References cited:
- US-A- 5 744 189
- PATENT ABSTRACTS OF JAPAN & JP 57 016 661 A (HOXAN CORP) 28 January 1982
- PATENT ABSTRACTS OF JAPAN & JP 57 016 660 A (HOXAN CORP) 28 January 1982
- DATABASE WPI Week 198421, Derwent Publications Ltd., London, GB; AN 1984-132430, XP002948969 KHARK AGRIC INST.: 'Conservation of animal feedstuffs - by breaking up material, loading it into container layer by layer and admitting carbon di: oxide' & SU 1 037 905 A 30 August 1983

## Description

The present invention relates to a process for conserving/ensiling feed material, where liquid carbon dioxide is utilised as the ensiling medium. More specifically the invention relates to ensiling of green fodder, where liquid carbon dioxide is introduced into the feed material so as displace inter alia oxygen thereby, in order to create a favorable environment for the ensiling process.

Ensiling - sour feed fermentation is utilised to a great degree for conserving plant material, and yields as the end product silo feed or sour feed.

The ensiling - sour feed fermentation takes place in the following phases:
1) Just after the introduction of plant material (into the silo or round ball) some of the oxygen in the plant material will lead to respiration in the plant cells during the formation of carbon dioxide and heat. The respiration takes place at the expense of readily digestible carbohydrates. Besides the plant cells facultative anaerobic and aerobic microorganisms will also take part in this process.
2) In the second phase coliforme bacteria, and also other bacteria, produce small amounts of acetic acid. This phase is of short duration.
3) In the third phase lactic acid bacteria will convert readily digestible carbohydrates to lactic acid.
4) In the fourth phase a stable state of equilibrium is achieved in the mass of sour feed with an approximately constant lactic acid content and constant pH.
   The three first phases will last for 3 - 5 days and the fourth phase 2 - 3 weeks.
5) If too little lactic acid is formed to yield a stable sour feed a fifth phase can arise which yields acid feed of poor quality. Butyric acid bacteria will convert lactic acid into butyric acid, and protein is also decomposed into inter alia ammonia.

The above indicated five phases can be divided into two main phases, namely a first aerobic phase where respiration takes place, and thereafter an anaerobic phase also designated " main fermentation " which comprises the phases 2 - 5.

In acid feed fermentation there are four groups of microorganisms which mainly affect the result: lactic acid bacteria, coli - aerogenes bacteria, butyric acid bacteria and mould fungus.

On ensiling it is desirable that there are formed as much lactic acid bacteria as possible, and thereby lactic acid, at the expense of the other bacteria.

The lactic acid bacteria are as mentioned anaerobic and do not need oxygen in order to grow and function. They thrive best at 10 - 35°C. An ideal temperature is 20°C, and a pH in the region of 3.5 - 4.

Coli - aerogenes bacteria produce acetic acid. They tolerate a pH on the region of 4.5 - 5.5, are capable of surviving at 27 - 35°C. The coli - aerogenes bacteria are facultative anaerobic.

The butyric acid bacteria function at a 35 - 40°C temperature range and tolerate a pH in the range of 4.2 - 4.5. They do not need oxygen in order to grow.

Mould fungus needs an abundant supply of oxygen in order to grow. High mould fungus activity leads to strong heat action in the silo feed, and the feed will be destroyed.

In order to regulate the ensiling process ensiling agents are utilised of which formic acid is the most used. The formic acid lowers the pH of the feed, and the plant structure is somewhat degraded, so that the feed packs better. The formic acid leads to an increased amount of pressure juice which implies loss of nutrients.

The silo juice also becomes more acidic, and can cause on uncontrolled draining an acidification of a watercourse. Moreover the use of formic acid represents a corrosion problem for equipment, plus also a certain health risk because of its corroding characteristics.

Hitherto it is known to utilise carbon dioxide in different forms (gas, solid, liquid) for ensiling feed materials. Some of these applications are described for example in JP 57016660, JP 57016661 and US 5744189. The publications describe the utilisation of carbon dioxide in various silos.

An object of the present invention is to develop a process which can be utilised for feed material which is not to be stored in conventional silos, but which can be pressed in so-called round balls.

The inventor of the present invention has shown (results from the experimental tests are given in the experimental section below) that the technology which is developed for silos cannot be used for such round balls. From Example 1 it is evident that carbon dioxide in solid form (dry ice) does not function, and from Examples 2 and 3 it can be concluded that the addition of carbon dioxide must take place before the round balls are enveloped in plastic.

The ensiling of predried green fodder can offer certain advantages. On predrying the concentration of soluble substances increases, and thus the osmotic pressure increases also. Compared with other microorganisms in the acid feed mass the lactic acid bacteria are resistant to increased osmotic pressure, while the butyric acid bacteria are completely inhibited by a dry stuff percentage in the range of 45 - 50. A good acid feed having a pH above five can be obtained. On predrying butyric acid and lactic acid bacteria also become inhibited because of lack of water. Bacteriologically there are no limits to the optimum dry stuff content of the green fodder on ensiling.

The problem is however the increased oxygen content of the green fodder, and thus the development of mould fungus and the bacteria of decay that lead to an increased temperature, and destruction of the silo feed.

Formic acid has no positive effect as an ensiling agent when the dry stuff percentage comes above 30%.

As will be evident from the description below the process according to the present invention can however also be utilised for predried green fodder.

The development goes against two-stage harvesting and predrying of the grass. The problem is then an increased temperature and formation of mould in the feed due to the presents of substantially amounts of oxygen/air in the grass. By virtue of the predrying the oxygen will not be consumed by the natural respiration because the grass is predried, and the oxygen present provides favourable growth conditions for mould fungus.

### Example 1

A test with carbon dioxide as ensiling agent in strongly predried round balls (air dried for at least 48 hours), having a dry stuff content of over 60%, was performed. Carbon dioxide ice (dry ice) was added to the grass during pressing of the round ball. Thereafter the round ball was enveloped with plastic film. The result that was obtained was not satisfactory, probably because the predried grass had the effect of being heat insulating so that the dry ice sublimed too slowly to expel the oxygen in the first critical phase.

### Example 2

The feed material (having a dry stuff percentage of over 60) was first pressed to round balls, and thereafter packed in plastic. Carbon dioxide gas (having a pressure of about 1 bar) was introduced into the grass ball through a hole in the plastic film. There were employed 2 - 3 kg. carbon dioxide per round ball. Compared to control round balls, which ware not supplied with carbon dioxide, there was no or only little improvement. Probably the explanation is that during the injection all the air has not been replaced with carbon dioxide, and/or that the round balls have not been made sufficiently tight after the injection. It was concluded that the result was not satisfactory, and that the method was not suitable.

### Example 3

A liquid carbon dioxide having a pressure of about 160 psi was utilised. The carbon dioxide was injected with an injection spear, and the injection took place before the grass ball was enveloped with plastic film. There was utilised about 2.5 kg. CO₂ for one round ball, and this amount was injected over a period of about 10 seconds. The liquid carbon dioxide changed phase and went over to a snow form, which thereafter sublimed to carbon dioxide gas over a period of some few minutes.

The central concept that is employed in the present invention is thus that the carbon dioxide is added to the round balls before these are enveloped with plastic. Thus in order to inject the carbon dioxide perforation of the plastic film is avoided. Furthermore the oxygen that is in the round balls during the injection is completely expelled by the carbon dioxide.

The plastic materials which are utilised are partially permeable to gases, that is to say they let through gases, for example out of the round ball if there is a sufficient excess pressure in the round ball. When carbon dioxide is added after the round ball is enclosed by plastic there will be present sufficient residual quantities of oxygen in the round ball for the undesired aerobic microbe activity to take place. Thus the technology which is employed in conventional silos cannot be used for ensiling/conserving grass in round balls.

The tests have shown that it is quite important that the carbon dioxide is supplied before the round ball is sealed with plastic.

The process according to the present invention is thus characterised in that it comprises, in the indicated sequence of steps:
a) that the feed material is pressed, for example to round balls,
b) that liquid carbon dioxide is added to the feed material, which after addition will change phase to carbon dioxide snow, and
c) that the feed material is enclosed by a material in film form while the carbon dioxide is in the form of snow, that is to say before the carbon dioxide has become transformed into carbon dioxide gas.

Further specific embodiments of the present invention are given in the dependent claims.

Tests have shown that it is appropriate to employ liquid carbon dioxide having a pressure of 100 to 250 psi, since this on injection will rapidly distribute itself (in contrast to carbon dioxide in solid form) in the whole round ball. Furthermore the carbon dioxide liquid will be rapidly phase-transformed to solid form, that is to say carbon dioxide snow. This is however a condition, which thermodynamically is not at equilibrium, and which thus, will be converted to gaseous carbon dioxide.

Example 3 above shows however that this snow state lasts sufficiently long to enable the round ball to be packed in plastic. With the conditions that are indicated in Example 3 above this snow state will last up to about 1 minute, and this is sufficient to enable to round balls to be packed. Thus one achieves that the carbon dioxide supplied homogeneously (because of dispersion) in the round ball (because of it having been injected in liquid form) remains in the form of snow sufficiently long (because it is not directly evaporated to gas form) to enable the round ball to be sealed.

The tests provide such good results that it appears as if all the oxygen has become displaced by carbon dioxide, and the desired anaerobic activity is ensured. Mould-free grass was obtained, and this could be utilised the whole winter. Control balls without the addition of carbon dioxide, or with the addition of formic acid were completely destroyed by mould and the action of heat.

The process according to the present invention can also be utilised in large sacks of plastic filled with crushed grain. The oxygen - free atmosphere that is established will effectively prevent the growth of mould fungus.

Tests were also made with the addition of taste-promoting substances in the form of a concentrate having the taste of clover ("NAT, -HE-U/aroma"), which led to a better feed intake of the acid feed.

In conclusion, a very rapid establishment of an anaerobic environment is achieved by the present invention. This ensures that the feed material is not destroyed even if it is kept in round balls where an increase of temperature often represents a problem, both because of microbe activity and the heat of the sun.

If the method is utilised on grass which is not predried the result is at least as good as by the addition of formic acid. Furthermore the method can, in contrast to formic acid, also be utilised for predried grass, and this gives an acid feed having a higher nutritional value by virtue of a higher content of sugar and other carbohydrates.

The process is environment friendly since it leads to less silo juice, and the silo juice is less contaminating than that which is obtained by using formic acid.

## Claims

1. Process for conserving/ensiling feed material, where liquid carbon dioxide is utilised as an ensiling agent, **characterised in that** the process comprises the following steps in the indicated sequence:
a) that the feed material is pressed to round balls,
b) that liquid carbon dioxide is added to the feed material, which after addition will change phase to carbon dioxide snow, and
c) that the feed material is enclosed by a material in the form of film, while the carbon dioxide is in the form of snow, that is to say before the carbon dioxide has been converted to carbon dioxide gas.

2. Process in accordance with claim 1, **characterised in that** the liquid carbon dioxide is added at a pressure in the range of 100 - 250 psi (690000 - 1725000 N/m²), preferably 150 - 200 psi (1035000 - 1380000 N/m²), most preferably 160 psi (1104000 N/m²).

3. Process in accordance with claim 2, **characterised in that** 0.001 - 0.01 kg, preferably 0.004 kg of liquid carbon dioxide is added per kg. of feed material.

4. Process in accordance with one of the claims 2 or 3, **characterised in that** the liquid carbon dioxide is added over the course of 60 seconds, preferably over the course of 30 seconds, and most preferably over the course of 10 seconds.

5. process in accordance with claim 1, **characterised in that** the feed material is enclosed by the film-formed material within 120 seconds, more preferably within sixty seconds, and most preferably within 20 seconds after the addition of liquid carbon dioxide.

6. Process in accordance with claim 1, **characterised in that** the carbon dioxide is injected via a number of nozzles which are partially inserted into the round balls.

7. process in accordance with claim 1, **characterised in that** the steps (a) - (c) are automated, and conducted at predetermined time intervals.

8. Process in accordance with one of the claims 1 - 7, **characterised in that** step a) the film-formed material is a plastic material.

9. Process in accordance with claim 7, **characterised in that** step a) is carried out with a round ball packing machine, for example of the Kverneland 7515 type, that step b) is carried out by supplying carbon dioxide at a pressure of 150 - 200 psi (1035000 - 1380000 N/m²), via 1/4 inch (0,635 cm) pipe for 10 seconds, after which the round balls are enclosed with a plastic material within 20 seconds after the injection of carbon dioxide.

10. , Process in accordance with claim 8, **characterised in that** the plastic material is in the form of a plastic film having a thickness in the range of 5 - 100 µm, preferably 25 µm, and that the round ball is enclosed with from 3 to 10 layers of this material,

11. Process in accordance with one of the claims 1 - 10, **characterised in that** the feed material is predried to a drystuff percentage of over 30%, preferably over 50%, and most preferably 60%.

12. Process in accordance with one of the claims 1 - 11, **characterised in that** taste-promoting substances are also added to the feed material.

13. Process in accordance with one of the claims 1 - 12, **characterised in that** additional conserving agents are added to the feed material.

## Patentansprüche

1. Verfahren zur Konservierung/Silierung eines Futtermaterials, bei dem flüssiges Kohlendioxid als Silierungsmittel verwendet wird, **dadurch gekennzeichnet, daß** das Verfahren die folgenden Schritte in der angegebenen Reihenfolge umfaßt:
a) Pressen des Futtermaterials zu Rundballen,
b) Zugeben des flüssigen Kohlendioxids zu dem Futtermaterial, wobei das flüssige Kohlendioxid nach der Zugabe unter Phasenumwandlung in Kohlendioxidschnee übergeht,
c) Einschließen des Futtermaterials in einem in Form einer Folie vorliegenden Material während das Kohlendioxid in Form von Kohlendioxidschnee vorliegt, d.h. bevor der Kohlendioxidschnee in gasförmiges Kohlendioxid umgewandelt worden ist.

2. Verfahren nach Anspruch 1, **dadurch gekennzeichnet, daß** das flüssige Kohlendioxid bei einem Druck im Bereich von 100 bis 250 psi (690000 - 1725000 N/m²), vorzugsweise 150 bis 200 psi (1035000 - 1380000 N/m²), am bevorzugtesten bei einem Druck von 160 psi (1104000 N/m²) zugegeben wird.

3. Verfahren nach Anspruch 2, **dadurch gekennzeichnet, daß** 0,001 bis 0,01 kg und vorzugsweise 0,004 kg flüssiges Kohlendioxid pro Kilogramm Futtermaterial zugegeben werden.

4. Verfahren nach einem der Ansprüche 2 und 3, **dadurch gekennzeichnet, daß** das flüssige Kohlendioxid während eines Zeitraums von 60 s, vorzugsweise während eines Zeitraums von 30 s und noch bevorzugter während eines Zeitraums von 10 s zugegeben wird.

5. Verfahren nach Anspruch 1, **dadurch gekennzeichnet, daß** das Futtermaterial innerhalb von 120 s, noch bevorzugter innerhalb von 60 s und am bevorzugtesten innerhalb von 20 s nach der Zugabe des flüssigen Kohlendioxids in dem aus einer Folie bestehenden Material eingeschlossen wird.

6. Verfahren nach Anspruch 1, **dadurch gekennzeichnet, daß** das Kohlendioxid durch mehrere Düsen, die partiell in die Rundballen eingeführt werden, injiziert wird.

7. Verfahren nach Anspruch 1, **dadurch gekennzeichnet, daß** die Schritte (a) bis (c) automatisiert werden und in vorher festgelegten Zeitintervallen durchgeführt werden.

8. Verfahren nach einem der Ansprüche 1 bis 7, **dadurch gekennzeichnet, daß** das aus einer Folie bestehende Material ein Kunststoffmaterial ist.

9. Verfahren nach Anspruch 7, **dadurch gekennzeichnet, daß** Schritt a) mit einer Rundballenpackmaschine, z.B. vom Typ Kverneland 7515, durchgeführt wird, daß Schritt b) durchgeführt wird, indem das Kohlendioxid mit einem Druck von 150 bis 200 psi (1035000 - 1380000 N/m²) durch ein 1/4-Inch-Rohr (0,635 cm) während eines Zeitraums von 10 s zugegeben wird, wonach die Rundballen innerhalb von 20 s nach dem Injizieren des Kohlendioxids in ein Kunststoffmaterial eingeschlossen werden.

10. Verfahren nach Anspruch 8, **dadurch gekennzeichnet, daß** das Kunststoffmaterial in Form einer Kunststofffolie vorliegt, deren Dicke im Bereich von 5 bis 100µm liegt und vorzugsweise 25 µm beträgt, und daß der Rundballen in 3 bis 10 Lagen dieses Materials eingeschlossen wird.

11. Verfahren nach einem der Ansprüche 1 bis 10, **dadurch gekennzeichnet, daß** das Futtermaterial auf einen in Prozent angegebenen Trockensubstanzgehalt von mehr als 30 %, vorzugsweise mehr als 50 % und am bevorzugtesten 60 % vorgetrocknet wird.

12. Verfahren nach einem der Ansprüche 1 bis 11, **dadurch gekennzeichnet, daß** geschmacksfördernde Substanzen zu dem Futtermaterial gegeben werden.

13. Verfahren nach einem der Ansprüche 1 bis 12, **dadurch gekennzeichnet, daß** zusätzliche Konservierungsmittel zu dem Futtermaterial gegeben werden.

## Revendications

1. Procédé pour conserver/ensiler une matière alimentaire, où du dioxyde de carbone liquide est utilisé comme agent d'ensilage, **caractérisé en ce que** le procédé comprend les étapes suivantes dans l'ordre indiqué :
a) la matière alimentaire est pressée en balles rondes ;
b) du dioxyde de carbone liquide est ajouté à la matière alimentaire qui, après addition, change de phase en neige de dioxyde de carbone, et
c) la matière alimentaire est entourée par une matière sous forme de film, tandis que le dioxyde de carbone est sous forme de neige, c'est-à-dire avant que le dioxyde de carbone ait été converti en gaz dioxyde de carbone.

2. Procédé selon la revendication 1, **caractérisé en ce que** le dioxyde de carbone liquide est ajouté à une pression dans le domaine de 100-250 psi (690 000 - 1 725 000 N/m²), de préférence 150 - 200 psi (1 035 000 - 1 380 000 N/m²), de manière particulièrement préférable 160 psi (1 104 000 N/m²).

3. Procédé selon la revendication 2, **caractérisé en ce que** 0,001 - 0,01 kg, de préférence 0,004 kg de dioxyde de carbone liquide est ajouté par kg de matière alimentaire.

4. Procédé selon l'une des revendications 2 et 3, **caractérisé en ce que** le dioxyde de carbone liquide est ajouté en 60 s, de préférence en 30 s, et de manière particulièrement préférable en 10 s.

5. Procédé selon la revendication 1, **caractérisé en ce que** la matière alimentaire est entourée par la matière formant un film en 120 s, de préférence encore en 60 s et de manière particulièrement préférable en 20 s après l'addition du dioxyde de carbone liquide.

6. Procédé selon la revendication 1, **caractérisé en ce que** le dioxyde de carbone est injecté par un certain nombre de diffuseurs qui sont insérés partiellement dans les balles rondes.

7. Procédé selon la revendication 1, **caractérisé en ce que** les étapes (a) - (c) sont automatisées et réalisées à des intervalles de temps prédéterminés.

8. Procédé selon l'une des revendications 1-7, **caractérisé en ce que**, dans l'étape a), la matière formant un film est une matière plastique.

9. Procédé selon la revendication 7, **caractérisé en ce que** l'étape a) est réalisée avec une machine de production de balles rondes, par exemple du type Kverneland 7515, **en ce que** l'étape b) est réalisée par apport de dioxyde de carbone à une pression de 150 - 200 psi (1 035 000 - 1 380 000 N/m²), par un tube de ¼ de pouce (0,635 cm) pendant 10 s, après quoi les balles rondes sont entourées par une matière plastique dans les 20 s qui suivent l'injection de dioxyde de carbone.

10. Procédé selon la revendication 8, **caractérisé en ce que** la matière plastique est sous forme d'un film plastique ayant une épaisseur dans le domaine de 5-100 µm, de préférence de 25 µm et **en ce que** la balle ronde est entourée par 3 à 10 couches de cette matière.

11. Procédé selon l'une des revendications 1-10, **caractérisé en ce que** la matière alimentaire est préséchée à un pourcentage de matière sèche supérieur à 30 %, de préférence supérieur à 50 %, et de manière particulièrement préférable de 60 %.

12. Procédé selon l'une des revendications 1-11, **caractérisé en ce que** des substances favorisant le goût sont ajoutées aussi à la matière alimentaire.

13. Procédé selon l'une des revendications 1-12, **caractérisé en ce que** des agents conservateurs supplémentaires sont ajoutés à la matière alimentaire.
